# EUROPEAN PATENT APPLICATION

(11) **EP 3 616 963 A1**
(43) Date of publication of application: **04.03.2020**
(21) Application number: 19193035.3
(22) Date of filing: 22.08.2019
(51) Int. Cl.: B60K 28/06, B60W 10/04, B60W 10/184, B60W 10/20, B60W 10/06, B60W 30/095

(54) **VEHICLE STOP SUPPORT SYSTEM**

(30) Priority: 28.08.2018 JP 2018159066
(71) Applicant: Mazda Motor Corporation, Aki-gun, Hiroshima 730-8670 (JP)
(72) Inventor: SUGANO, Takashi, Hiroshima 730-8670 (JP); YAMASHITA, Takuya, Hiroshima 730-8670 (JP); FUSHIMA, Takesato, Hiroshima 730-8670 (JP)
(74) Representative: Behr, Wolfgang

(57) **Abstract**

Provided is a vehicle stop support system capable of supporting vehicle stop so as to further contribute to rescue of a driver in an emergency condition.

The vehicle stop support system (1) comprises: an abnormality detection part (51) for detecting a physical abnormality of a driver; a candidate detection part (55) for detecting a plurality of stop point candidates which exist in a traveling direction of the vehicle; a required time period estimation part (57) for estimating a time period required to reach each of the stop point candidates; a waiting time period estimation part (61) for estimating a waiting time period which is a time period from a time when the vehicle reaches each of the stop point candidates through until a rescue operation for the driver is started; a stop point setting part (67) for setting a stop point; and a vehicle control part 68 for controlling the vehicle to travel to the stop point and stop at the stop point. The stop point setting part (67) is operable to set, as the stop point, one of the plurality of stop point candidates which is smallest in terms of a sum of the required time period and the waiting time period.

## Description

### TECHNICAL FIELD

The present invention relates to a vehicle stop support system for supporting stop of a vehicle which is traveling.

### BACKGROUND ART

There has been known a system for causing a vehicle to stop on behalf of a driver, in the event that the driver becomes unable to continue safe driving due to a sudden change in his/her body condition or the like (such a driver will hereinafter be referred to also as "driver in an emergency condition"). For example, in the following Patent Document 1, there is disclosed a system for causing a vehicle to stop in an evacuation space, upon detection of a physical abnormality of a driver. Further, as an improvement to such a system, in the Patent Document 2, there is disclosed prohibiting a vehicle from stopping in an area having poor visibility. This vehicle stop support system makes it possible to keep a driver in an emergency condition, a fellow passenger and other road user away from danger of a vehicle collision, and rescue the driver after stop of the vehicle.

### CITATION LIST

### [Patent Document]

Patent Document 1: JP 2017-001519A
Patent Document 2: JP 2017-190048A

### SUMMARY OF INVENTION

### [Technical Problem]

In recent years, along with development of technologies for automated vehicle driving, technologies concerning components such as a high-accuracy geographic map and a vehicle-mounted camera have been making great progress. In the field of vehicle stop support systems, it is expected to effectively utilize information provided from these components to support vehicle stop so as to further contribute to rescue of a driver in an emergency condition.

The present invention has been made to fulfill this demand, and an object of the present invention to provide a vehicle stop support system capable of supporting vehicle stop so as to further contribute to rescue of a driver in an emergency condition.

### [Solution to Technical Problem]

In order to achieve the above object, the present invention provides a vehicle stop support system for supporting stop of a vehicle which is traveling. The vehicle stop support system comprises: an abnormality detection part for detecting a physical abnormality of a driver; a candidate detection part for detecting a plurality of stop point candidates which exist in a traveling direction of the vehicle; a required time period estimation part for estimating a time period required to reach each of the stop point candidates; a waiting time period estimation part for estimating a waiting time period which is a time period from a time when the vehicle reaches each of the stop point candidates through until a rescue operation for the driver is started; a stop point setting part for setting a stop point; and a vehicle control part for controlling the vehicle to travel to the stop point and stop at the stop point, wherein the stop point setting part is operable to set, as the stop point, one of the plurality of stop point candidates which is smallest in terms of a sum of the required time period and the waiting time period.

A time when the "rescue operation for the driver is started" means a time when a person who is eligible to be engaged in emergency medical care (e.g., an emergency life-saving technician or a medical doctor) comes into contact with the driver for the purpose of rescue. After stop of the vehicle, the eligible person comes into contact with the driver to start the rescue operation (e.g., cardiopulmonary resuscitation) for the driver.

According to the above feature, one of the plurality of stop point candidates which is smallest in terms of the sum of the required time period and the waiting time period is set as the stop point. This makes it possible to stop the vehicle at a point where the rescue operation for the driver can be started at the earliest timing.

Preferably, in the vehicle stop support system of the present invention, the waiting time period estimation part is operable to estimate the waiting time period based on a distance of a route from a point where an ambulance is deployed, to each of the stop point candidates.

The "ambulance" means a vehicle for picking up and taking an injured or sick person to a medical facility in emergency traveling.

Further, the point where an ambulance is deployed (ambulance deployment point)" means a point where an ambulance is usually deployed so as to respond to a call for service, such as a fire department or a medical center. In the rescue operation for the driver, it is necessary that an ambulance in which an emergency life-saving technician or a medical doctor rides promptly arrives at the stop point. In this regard, it is expected that a shorter distance of a route from the ambulance deployment point to the stop point allows the waiting time period to become shorter.

According to the above feature, the waiting time period is estimated based on the distance of the route from the ambulance deployment point to each of the stop point candidates. This makes it possible to easily and accurately estimate the waiting time period.

More preferably, in the above vehicle stop support system, the waiting time period estimation part is operable to estimate the waiting time period based on a traffic situation of the route from the point where an ambulance is deployed, to each of the stop point candidates.

For example, in a case where there is a traffic jam or a road construction zone in the route from the ambulance deployment point to the stop point, the ambulance is likely to require taking a long time period to arrive at the stop point, thereby leading to a delay in start of the rescue operation of the driver.

According to the above feature, the waiting time period is estimated based on the traffic situation of the route from the ambulance deployment point to each of the stop point candidates. This makes it possible to more accurately estimate the waiting time period.

### [Effect of Invention]

The present invention can provide a vehicle stop support system capable of supporting vehicle stop so as to further contribute to rescue of a driver in an emergency condition.

### BRIEF DESCRIPTION OF DRAWINGS

FIG. 1 is a block diagram showing a vehicle stop support system according to one embodiment of the present invention.
FIG. 2 is an explanatory diagram of a first pattern.
FIG. 3 is an explanatory diagram of a second pattern.
FIG. 4 is an explanatory diagram of a third pattern.
FIG. 5 is a flowchart showing a processing routine to be executed by an ECU.

### DESCRIPTION OF EMBODIMENTS

With reference to accompanying drawings, one embodiment of the present invention will now be described. For the sake of facilitating understanding of the description, the same reference sign is assigned to the same elements or components in the figures, and duplicated description of such a component will be omitted.

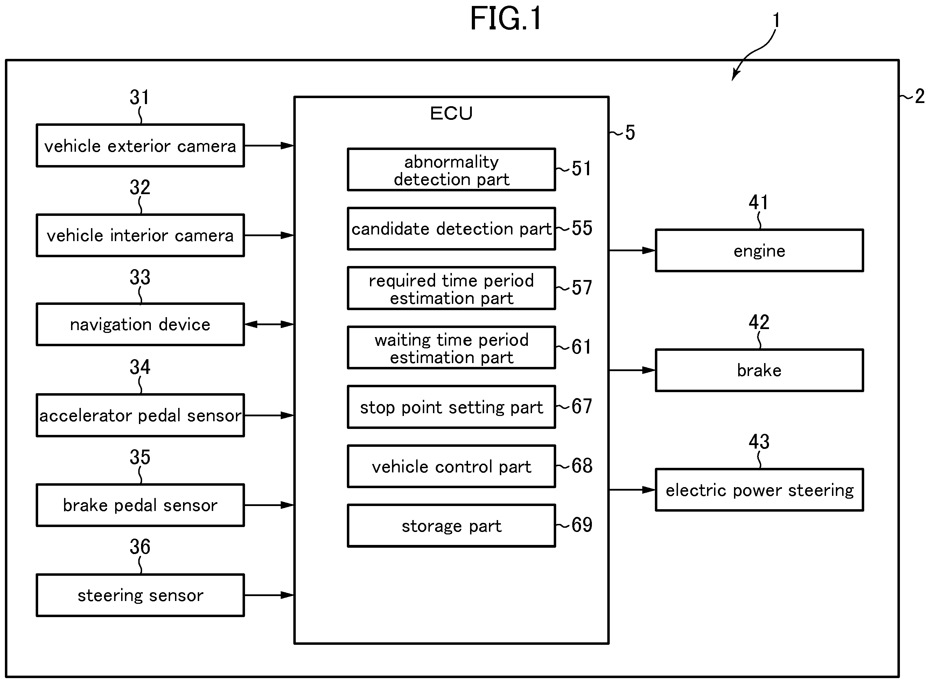

First of all, with reference to FIG. 1, the configuration of a vehicle stop system 1 (hereinafter referred to as "system 1") according to this embodiment will be described. FIG. 1 is a block diagram showing the system 1. The system 1 is equipped in a vehicle, and operable to support stop of the vehicle which is traveling, as an emergency measure. In this Description, a vehicle equipped with the system 1 will be referred to as "vehicle 2".

Further, in this Description, a forward movement direction of the vehicle 2 will be referred to as "front" or "forward", and a backward movement direction of the vehicle 2 will be referred to as "back" or "backward". Further, a left side with respect to the vehicle 2 oriented in the forward movement direction will be referred to as "left" or "leftward".

The system 1 comprises a vehicle exterior camera 31, a vehicle interior camera 32, a navigation device 33, an accelerator pedal sensor 34, a brake pedal sensor 35, a steering sensor 36, and an ECU (Electronic Control Unit) 5.

The vehicle exterior camera 31 is operable to take an image of the outside of the vehicle 2, particularly, the front of the vehicle 2, to acquire image data thereabout. The vehicle exterior camera 31 is composed of, e.g., an image sensor, and installed to a non-illustrated rearview mirror of the vehicle 2. The vehicle exterior camera 31 is also operable to transmit a signal corresponding to the acquired image data, to the ECU 5.

The vehicle interior camera 32 is operable to take an image of the inside of the vehicle 2 to acquire image data thereabout. Specifically, the vehicle interior camera 32 is operable to take an image of a range including the upper body of a driver in a passenger compartment of the vehicle 2. The vehicle interior camera 32 is composed of, e.g., an image sensor, and installed to a non-illustrated instrument panel of the vehicle 2. The vehicle interior camera 32 is also operable to transmit a signal corresponding to the acquired image data, to the ECU 5.

The navigation device 33 is capable of providing various information to a passenger of the vehicle 2. The navigation device 33 stores therein map information, or is capable of acquiring map information through communication with a server outside the vehicle 2. The map information contains a road configuration, an upper speed limit assigned to each road in accordance with law or regulation, and a traffic state of each road. The map information also contains information regarding points where ambulances are deployed, such as a fire department and a medical center. The navigation device 33 comprises a sensor for detecting the location of the vehicle 2, such as a GPS (Global Positioning System) senor or a self-contained navigation sensor. The navigation device 33 is operable to provide, to the passenger, map information, and information regarding the position of the vehicle 2 on the map, a time period required for the vehicle 2 to reach a given point, and others, with sound or display. The navigation device 33 is configured to be communicable with the ECU 5, and operable, in response to a request from the ECU 5, to transmit a signal to the ECU 5, thereby providing a variety of information thereto.

The accelerator pedal sensor 34 is a sensor for detecting a depression amount of a non-illustrated accelerator pedal of the vehicle 2. The accelerator pedal sensor 34 is operable to transmit, to the ECU 5, a signal corresponding to the detected depression amount.

The brake pedal sensor 35 is a sensor for detecting a depression amount of a non-illustrated brake pedal of the vehicle 2. The brake pedal sensor 35 is operable to transmit, to the ECU 5, a signal corresponding to the detected depression amount.

The steering sensor 36 is a sensor for detecting a steering direction and a steering angle of a non-illustrated steering wheel of the vehicle 2. For example, the steering sensor 36 is provided with an encoder, and operable to count the number of slits in a plate rotatable together with the steering wheel. The steering sensor 36 is operable to transmit, to the ECU 5, a signal corresponding to the detected steering direction and steering angle.

The ECU 5 is a control device for controlling components through signal transmission and receiving with respect thereto. The ECU 5 is partly or entirely constructed as an analog circuit or as a digital processor. ECU 5 comprises an abnormality detection part 51, a candidate detection part 55, a required time period estimation part 57, a waiting time period estimation part 61, a stop point setting part 67, a vehicle control part 68, and a storage part 69.

In FIG. 1, each function of the ECU 5 is shown as a block. However, it should be understood that a software modules incorporated in the analog circuit or digital processor of the ECU 5 needs not necessarily be divided as shown in FIG. 1. That is, each of the function block shown in FIG. 1 may be further segmentalized, or two or more of the function blocks may be integrated into a single function block which has functions of the two or more function blocks. It is apparent to a person of ordinary skill in the art that the internal configuration of the ECU 5 may be appropriately modified as long as the ECU 5 is configured to be capable of executing the after-mentioned processing routine.

The abnormality detection part 51 is configured to detect a physical abnormality of the driver of the vehicle 2. The abnormality detection part 51 is operable to detect the physical abnormality of the driver, based on signals received by the ECU 5 from the vehicle interior camera 32, the accelerator pedal sensor 34, the brake pedal sensor 35 and the steering sensor 36.

For example, the abnormality detection part 51 is operable to subject the image data acquired by the vehicle interior camera 32 to given processing to identify the upper body, head region, face, eyes, etc., of the driver and acquire information regarding the identified regions. Further, the abnormality detection part 51 is operable to detect information regarding driving manipulations of the driver, based on the signals received from the accelerator pedal sensor 34, the brake pedal sensor 35 and the steering sensor 36. Then, the abnormality detection part 51 is operable to perform a given calculation based on the acquired information to detect the state of consciousness of the driver, an open/closed state of the eyes of the driver, a line-of-sight direction of the driver, the position of the center of gravity of the driver, etc.

Further, the abnormality detection part 51 is operable to determine whether or not the line-of-sight direction of the driver is coincident with a traveling direction of the vehicle 2. Specifically, the abnormality detection part 51 is operable to determine whether or not the line-of-sight direction of the driver falls within a given range including the traveling direction of the vehicle 2. Additionally, the abnormality detection part 51 is operable to determine whether or not the center-of-gravity position of the driver is adequate, based on a distance from a seating surface of a seat on which the driver sits to the center of gravity of the driver.

Then, the abnormality detection part 51 is operable to perform a given calculation based on the above acquired information, to estimate a disorder/disease developing in the body of the driver. Examples of the disorder/disease include cerebrovascular diseases, heart diseases, gastrointestinal diseases, and syncope, which are difficult for the driver himself/herself to predict sudden development thereof.

The candidate detection part 55 is configured to detect a stop point candidate. Here, a point at which the system 1 causes the vehicle 2 to stop will be referred to as "stop point", and a point which has a potential to become the stop point will be referred to as "stop point candidate". The candidate detection part 55 is operable to acquire map information based on a signal received from the navigation device 33, and detect a plurality of stop point candidates each of which exists in the traveling direction of the vehicle 2 in the acquired map information, and satisfy a given condition.

The required time period estimation part 57 is configured to estimate a time period required to reach each of the stop point candidates detected by the candidate detection part 55. Specifically, the required time period estimation part 57 is operable to search a course to each of the stop point candidates and determine a vehicle speed pattern of the vehicle 2 when the vehicle 2 travels along the course, and to estimate a time period required for the vehicle 2 to reach each of the stop point candidates, based on a corresponding set of the course and the vehicle speed pattern.

The waiting time period estimation part 61 is configured to estimate a waiting time period at each of the stop point candidates detected by the candidate detection part 55. The waiting time period is a time period from a time when the vehicle 2 reaches each of the stop point candidates through until a rescue operation for the driver is started. A time when the "rescue operation for the driver is started" means a time when a person who is eligible to be engaged in emergency medical care (e.g., an emergency life-saving technician or a medical doctor) comes into contact with the driver for the purpose of rescue. After stop of the vehicle 2, the eligible person comes into contact with the driver to start the rescue operation (e.g., cardiopulmonary resuscitation) for the driver.

During the estimation of the waiting time period, the waiting time period estimation part 61 is operable to first acquire map information based on a signal received from the navigation device 33. Then, the waiting time period estimation part 61 is operable to detect, in the acquired map information, a point (e.g., a fire department or a medical center) which exists within 3 km from each of the stop point candidates and at which an ambulance is deployed. Then, the waiting time period estimation part 61 is operable to estimate the waiting time period, based on a distance of a route from the point where an ambulance is deployed (ambulance deployment point) to each of the stop point candidates.

Further, the waiting time period estimation part 61 is operable to acquire traffic information regarding the route from the ambulance deployment point to each of the stop point candidates, based on a signal received from the navigation device 33. Then, the waiting time period estimation part 61 is operable to estimate the waiting time period such that the waiting time period becomes longer when there is a traffic jam or a road construction zone in the route, as compared to when there is neither a traffic jam nor a road construction zone in the route.

The stop point setting part 67 is configured to narrow down the plurality of stop point candidates detected by the candidate detection part 55, based on a given condition, or set one of the stop point candidates, as the stop point. The details of setting of the stop point will be described later.

The vehicle control part 68 is configured to control the behavior of the vehicle 2. Specifically, the vehicle control part 68 is operable to transmit control signals, respectively, to an engine 41 and a brake 42 of the vehicle 2, so as to control the vehicle speed of the vehicle 2. Further, the vehicle control part 68 is operable to subject the image data acquired by the vehicle exterior camera 31, to given processing, to detect a demarcation line of a road on which the vehicle 2 is traveling. Then, the vehicle control part 68 is operable to transmit, to an electric power steering 43, a control signal created based on the detected demarcation line, to control the traveling direction of the vehicle 2.

The storage part 69 is composed of, e.g., a non-volatile memory, and stores therein a variety of information. The information stored in the storage part 69 is read by the abnormality detection part 51 and others, and used for various calculations.

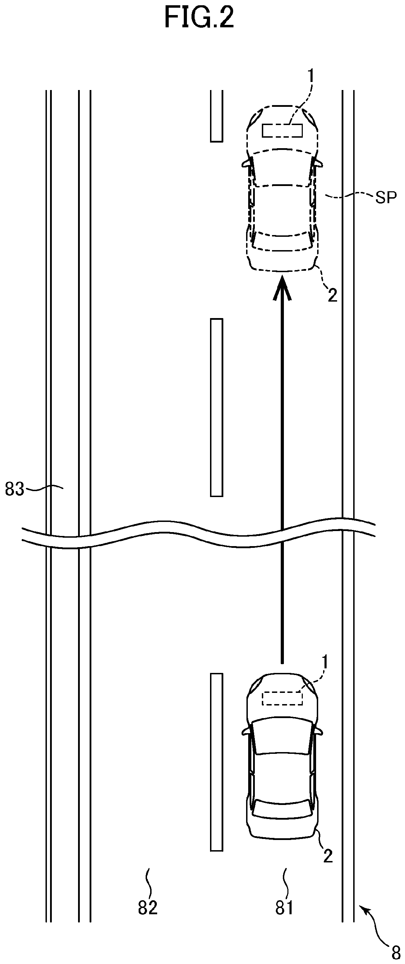

Next, with reference to FIGS. 2 to 4, control of the vehicle 2 by the system 1 will be described. FIGS. 2 to 4 show an environment where it is stipulated that any vehicle shall travel in the left lane, by law or regulation, like the Japanese traffic environment. A road 8 in FIGS. 2 to 4 is a four-lane road, wherein two lanes on one side consists of an overtaking lane 81 and a cruising lane 82. The system 1 is operable, upon satisfaction of a given condition during traveling of the vehicle 2, to control the vehicle 2 to stop at a stop point SP on behalf of the driver, as an emergency measure. The stop point SP is set in one of the following three patterns.

### [First Pattern]

FIG. 2 shows a first pattern in which the stop point setting part 67 (see FIG. 1) of the system 1 operates to set a point within the road 8, as the stop point SP. Specifically, FIG. 2 shows a situation where a given condition is satisfied when the vehicle 2 is traveling in the overtaking lane 81, and a point located on the overtaking lane 81 in the traveling direction of the vehicle 2 is set as the stop point SP. In this situation, the vehicle control part 68 (see FIG. 1) of the system 1 operates to transmit a control signal to the electric power steering 43 (see FIG. 1) so as to controllably cause the vehicle 2 to keep traveling in the overtaking lane 81.

### [Second Pattern]

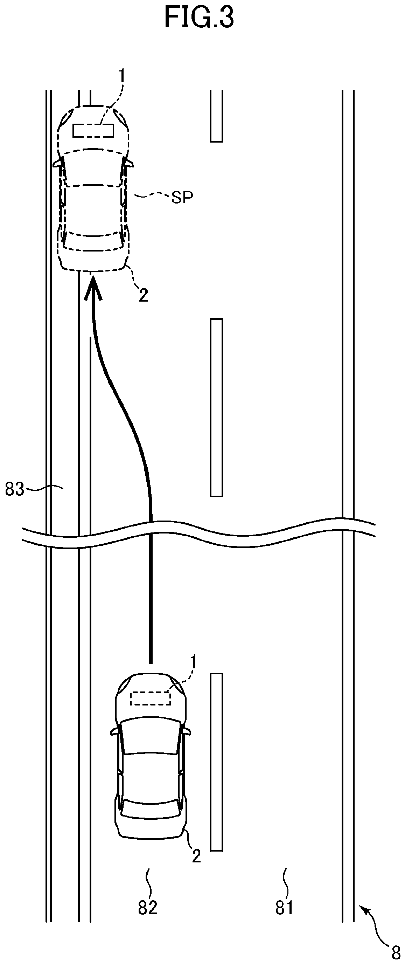

FIG. 3 shows a second pattern in which the stop point setting part 67 of the system 1 operates to set a road shoulder 83 of the road 8, as the stop point SP. Specifically, FIG. 3 shows a situation where a given condition is satisfied when the vehicle 2 is traveling in the cruising lane 82, and a road shoulder 83 existing in the traveling direction of the vehicle 2 is set as the stop point SP. In this situation, the vehicle control part 68 of the system 1 operates to transmit a control signal to the electric power steering 43 so as to controllably cause the vehicle 2 to keep traveling in the cruising lane 82 and move forwardly and obliquely leftwardly in the vicinity of the stop point SP.

### [Third Pattern]

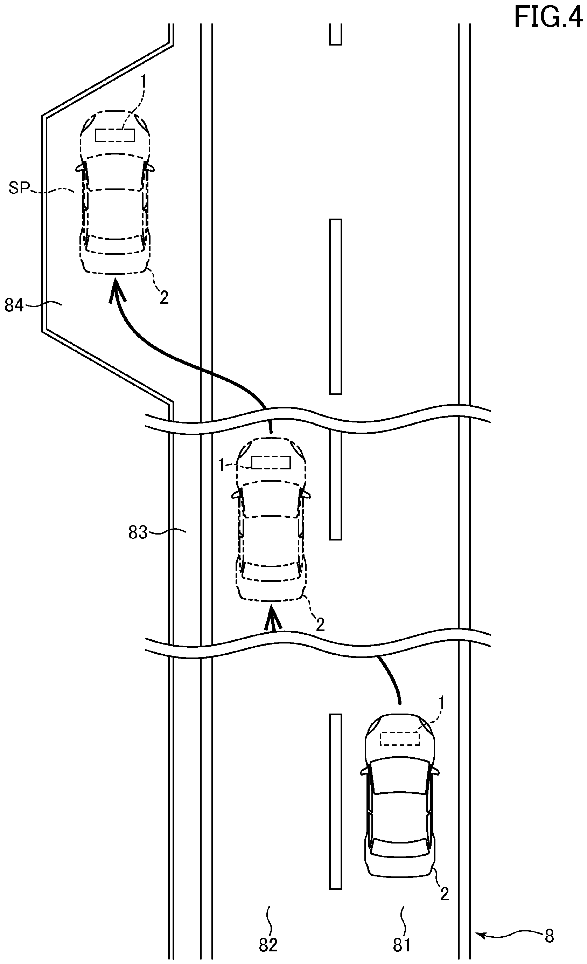

FIG. 4 shows a third pattern in which the stop point setting part 67 of the system 1 operates to set an emergency parking bay 84 provided on the lateral side of the road 8, as the stop point SP. Specifically, FIG. 4 shows a situation where a given condition is satisfied when the vehicle 2 is traveling in the overtaking lane 81, and an emergency parking bay 84 existing in the traveling direction of the vehicle 2 is set as the stop point SP. In this situation, the vehicle control part 68 of the system 1 operates to transmit a control signal to the electric power steering 43 so as to controllably cause the vehicle 2 to first move from the overtaking lane 81 to the cruising lane 82 and to keep traveling in the cruising lane 82 and move forwardly and obliquely leftwardly in the vicinity of the stop point SP.

In any of the first to third patterns, the vehicle control part 68 operates to, until the vehicle 2 reaches the vicinity of the stop point SP, transmit a control signal to the engine 41 and the brake 42 so as to control the vehicle speed of the vehicle 2 such that it becomes lower than 50 lm/h. Then, the vehicle control part 68 operates to controllably cause the vehicle 2 to stop at the stop point SP. After stop of the vehicle 2, the system 1 operates to blink a blinker and/or sound an alarm to prevent the vehicle 2 from being rear-ended by a following vehicle, and inform the outside of a fact that the driver of the vehicle 2 is in need of rescue.

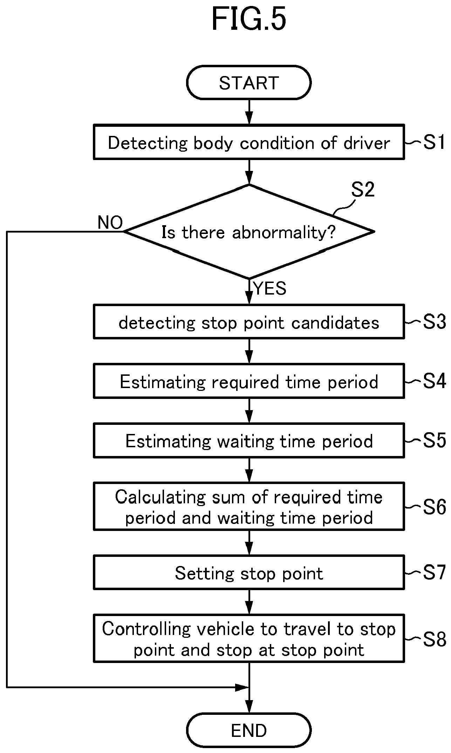

Next, with reference to FIG. 5, a processing routine to be executed by the ECU 5 (see FIG. 1) will be described. FIG. 5 is a flowchart showing the processing routine to be executed by the ECU 5. During traveling of the vehicle 2, this professing routine will be repeatedly executed with a given period. It should be noted that processing to be executed by each of the function blocks of the ECU 5 is also described as being executed by the ECU 5, in the lump, for the sake of simplicity of description.

First of all, in step S1 shown in FIG. 5, the ECU 5 operates to detect the body condition of the driver of the vehicle 2. Specifically, the ECU 5 operates to detect, based on the image data acquired by the vehicle interior camera 32 (see FIG. 1), the state of consciousness of the driver, the open/closed state of the eyes of the driver, the line-of-sight direction of the driver, the center-of-gravity position of the driver, etc.

In step S2, the ECU 5 operates to determine whether or not the driver has a physical abnormality. Specifically, the ECU 5 operates to determine, based on a result of the detection in the step S1, whether or not the driver has a physical abnormality which causes the driver to become unable to drive the vehicle 2 safely. For example, the ECU 5 may be configured to quantify the degree of consciousness of the driver, and, when the resulting quantified value is less than a given threshold, determine that the driver has a physical abnormality. When the driver is determined not to have any physical abnormality (S2: NO), the ECU 5 operates to terminate the vehicle stop support processing routine. On the other hand, when the driver is determined to have a physical abnormality (S2: YES), the ECU 5 proceeds to step S3.

In step S3, the ECU 5 operates to detect a stop point candidate. Specifically, the ECU 5 operates to acquire map information, based on a signal received from the navigation device 33, and detect a plurality of points each of which exists within 5 km from the vehicle 2 in the traveling direction of the vehicle 2, and satisfies a given condition, as a plurality of stop point candidates. The given condition may be set based on various factors such as properties of the vehicle 2, properties of the road on which the vehicle 2 is traveling, the body condition of the driver detected in the step S1.

In step S4, the ECU5 operates to estimate a time period required to reach each of the stop point candidates. Specifically, the ECU 5 operates to first search, based on a given algorithm, a course to each of the stop point candidates detected in the step S4, and determine a vehicle speed pattern of the vehicle 2 when the vehicle 2 travels along the course. Further, the ECU 5 operates to estimate a time period required to reach each of the stop point candidates, based on the determined course and vehicle speed pattern.

In step S5, the ECU 5 operates to estimate a waiting time period at each of the stop point candidates. Specifically, the ECU 5 operates to estimate the waiting time period with respect to each of the plurality of stop point candidates detected in the step S3, in the aforementioned manner.

In step S6, the ECU5 operates to calculate a sum of the required time period and the waiting time period, with respect to each of the plurality of stop point candidates. Specifically, the ECU 5 operates to calculate a linear sum of the required time period and the waiting time period calculated, respectively, in the steps S4 and S5, with respect to each of the plurality of stop point candidates detected at the step S3. In this process, a weight may be assigned to each of the required time period and the waiting time period.

In step S7, the ECU 5 operates to set a stop point. Specifically, the ECU 5 operates to set, as the stop point, one of the plurality of step point candidates detected at the step S3 which is smallest in terms of the sum of the required time period and the waiting time period, calculated in the step S6,

In step S8, the ECU 5 operates to control traveling of the vehicle 2 to the stop point and stop of the vehicle 2 at the stop point. Specifically, the ECU 5 operates to transmit control signals, respectively, to the engine 41, the brake 42 and the electric power steering 43 (see FIG. 1) so as to controllably cause the vehicle 2 to travel to the stop point and stop at the stop point. During this process, the manipulation of the accelerator pedal by the driver is invalidated. On the other hand, the manipulation of the brake pedal by the driver is validated. This is because, even when the driver is becoming unconscious, he/she is likely to attempt to stop the vehicle 2 so as to avoid collision with an obstacle. Here, the vehicle 2 may be configured such that a system for stabilizing the behavior of the vehicle 2, such as an anti-lock braking system or an antiskid brake system, is activated during traveling of the vehicle 2.

### [Functions/Effects of Embodiment]

In the system 1 according to the above embodiment, one of the stop point candidates which is smallest in terms of the sum of the required time period and the waiting time period is set as the stop point. This makes it possible to stop the vehicle 2 at a point where the rescue operation for the driver can be started at the earliest timing.

In the above embodiment, the waiting time period estimation part 61 is operable to estimate the waiting time period based on the distance of the route from the ambulance deployment point to each of the stop point candidates.

This makes it possible to easily and accurately estimate the waiting time period.

In the above embodiment,the waiting time period estimation part 61 is operable to estimate the waiting time period based on a traffic situation of the route from the ambulance deployment point to each of the stop point candidates.

This makes it possible to more accurately estimate the waiting time period.

As above, the present invention has been described based on one specific embodiment. However, it should be understood that the present invention is not limited to the specific embodiment. That is, various changes and modifications will be apparent to a person of ordinary skill in the art. Therefore, unless otherwise such changes and modifications depart from the scope of the present invention hereinafter defined, they should be construed as being included therein.

In the above embodiment, the abnormality detection part 51 of the ECU 5 is configured to detect the physical abnormality of the driver based on image data acquired by the vehicle interior camera 32. However, the present invention is not limited to this configuration. For example, in a case where the vehicle stop support system according to the present invention is equipped in a vehicle provided with an infrared sensor for detecting a body temperature or a pulse wave of a driver, a seat sensor for detecting a center-of-gravity position or a pulse wave depending on the posture of the driver, or the like, the abnormality detection part in the present invention may be configured to detect the physical abnormality of the driver based on detection information from such a sensor.

In the above embodiment, the required time period estimation part 57 of the ECU 5 is configured to search a course to each of the stop point candidates and determine a vehicle speed pattern of the vehicle 2 when the vehicle 2 travels along the course. However, the present invention is not limited to this configuration. For example, the required time period estimation part in the present invention may be configured to instruct the navigation device to perform search of the course and determination of the speed pattern, and, based on information provided from the navigation device, estimate the required time period.

In the above embodiment, the waiting time period estimation part 61 of the ECU 5 is configured to detect an ambulance deployment point and detect a waiting time period based on the detected ambulance deployment point. However, the present invention is not limited to this configuration. For example, the waiting time period estimation part in the present invention may be configured to instruct the navigation device to detect the ambulance deployment point, and, based on information provided from the navigation device, estimate the waiting time period.

### LIST OF REFERENCE SIGNS

- 1:: vehicle stop support system (system)
- 2:: vehicle
- 51:: abnormality detection part
- 53:: target time period setting part
- 55:: candidate detection part
- 57:: required time period estimation part
- 61:: waiting time period estimation part
- 67:: stop point setting part
- 68:: vehicle control part
- SP:: stop point

## Claims

1. A vehicle stop support system for supporting stop of a vehicle which is traveling, comprising:
an abnormality detection part for detecting a physical abnormality of a driver;
a candidate detection part for detecting a plurality of stop point candidates which exist in a traveling direction of the vehicle;
a required time period estimation part for estimating a time period required to reach each of the stop point candidates;
a waiting time period estimation part for estimating a waiting time period which is a time period from a time when the vehicle reaches each of the stop point candidates through until a rescue operation for the driver is started;
a stop point setting part for setting a stop point; and
a vehicle control part for controlling the vehicle to travel to the stop point and stop at the stop point,
wherein the stop point setting part is operable to set, as the stop point, one of the plurality of stop point candidates which is smallest in terms of a sum of the required time period and the waiting time period.

2. The vehicle stop support system according to claim 1, wherein the waiting time period estimation part is operable to estimate the waiting time period based on a distance of a route from a point where an ambulance is deployed, to each of the stop point candidates.

3. The vehicle stop support system according to claim 2, wherein the waiting time period estimation part is operable to estimate the waiting time period based on a traffic situation of the route from the point where an ambulance is deployed, to each of the stop point candidates.
